(19) Europäisches Patentamt
European Patent Office
Office européen des brevets

(11) **EP 3 012 229 A1**

(12) **EUROPEAN PATENT APPLICATION**

(43) Date of publication:
**27.04.2016 Bulletin 2016/17**

(51) Int Cl.:
**C02F 1/32** *(2006.01)*  **B01J 19/12** *(2006.01)*
**C02F 103/00** *(2006.01)*

(21) Application number: **15190483.6**

(22) Date of filing: **20.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.10.2014 FI 20145918**

(71) Applicant: **Auramarine Oy**
**20660 Littoinen (FI)**

(72) Inventor: **Salo, Jouko**
**20660 Littoinen (FI)**

(74) Representative: **Papula Oy**
**P.O. Box 981**
**00101 Helsinki (FI)**

(54) **WATER FEED DEVICE FOR UV PARALLEL REACTORS**

(57) The invention relates to a water treatment system and to a corresponding method for removing impurities from water. The system comprises at least two parallel-connected UV reactors, an inlet channel and an outlet channel for conveying the water being treated into and out from the system, branch channels for distributing and conveying the water of the inlet channel to the UV reactors, collector channels for conveying and combining the water from the UV reactors into the outlet channel, and in the flow direction before the UV reactors a filter for removing larger impurities from the water. According to the invention, in the water flow direction before each UV reactor there is a UV-reactor-specific flow equalizing plate provided with a unique flow hole combination for conveying the water flow of the inlet channel equally to the UV reactors and for providing a uniform flow field within the UV reactor.

Fig. 1

**Description**

**FIELD OF THE INVENTION**

The invention relates to a system and to a corresponding method for removing impurities from water, specifically for use in connection with treatment of ballast waters of vessels and waters of water purification plants.

**BACKGROUND OF THE INVENTION**

It is likely that in the near future, an international convention for purification of the ballast waters of vessels will enter into force in order to prevent spreading of non-native species. Currently, such a system is already being used on many ships. There are a variety of purification methods, and the most common one is two-stage purification in which larger organisms and solid material are first filtered from ballast water which is then treated with strong UV irradiation in an UV reactor. UV light causes photochemical changes in the organisms and breaks their DNA chain bonds. Ballast water is normally treated this way both when drawing the water into and when discharging the water out from ballast tanks. This ensures sufficient purity of the water.

There are several different size classes of ships that treat ballast waters, from small cargo vessels to supertankers and cruisers. The amounts of the treated ballast water thus vary greatly from one vessel to another. Regardless of vessel size, the ballast water must be quickly pumped in or out so that there will not be long delays due to this procedure. However, it is not cost-effective to manufacture an optimally sized water treatment apparatus for each ship size.

Thus, water treatment devices are normally manufactured in just a few different sizes, and a required number of these basic sizes are then connected in parallel according to the size and available spaces of the ship to reach the desired treatment capacity.

The system is functional and economical as compared with designing and manufacturing ship-specific, unique systems. However, the parallel connection has its own problems. For instance 2-5 identical devices, even more, may be connected in parallel. Furthermore, as they are installed in the limited space of a ship, the necessary pipeworks are not optimal in terms of their fluid dynamics. Thus, the flow rates of the waters being treated can vary even to a significant degree in different parallel-connected units. Furthermore, the non-uniform and vortical flows in the channels prevent a uniform flow field from being formed within the UV reactor, which is, however, a prerequisite for good operation of the UV reactor. Different types of chokers have been used to equalize the flows, but they only increase flow resistance and reduce the treatment capacity and increase the power requirement of the apparatus.

**OBJECTIVE OF THE INVENTION**

The objective of the invention is to remedy the above-mentioned defects of the prior art. Specifically, the objective of the invention is to disclose a new water treatment system and water treatment method by means of which, without significantly increasing the flow resistances, water flows can be divided in a uniform way among parallel-connected UV reactors. In addition, the objective of the invention is to equalize flows within the UV reactor and this way to enhance the desired effects of UV radiation on the water being treated.

**SUMMARY OF THE INVENTION**

The water treatment system according to the invention is designed for removing impurities from water. Specifically, it has been developed for purification of ballast waters of ships but can also be successfully used in connection with industrial and municipal water purification plants. The system comprises at least two parallel-connected UV reactors, and an inlet channel and an outlet channel for conveying the water being treated into and out of the system. In addition, it comprises branch channels for distributing and conveying the water of the inlet channel to the UV reactors, and collector channels for conveying and combining the treated water from the UV reactors into the common outlet channel. According to the invention, in the water flow direction before each UV reactor there are UV-reactor-specific and unique flow equalizing plates that differ from one another. Each equalizing plate is provided with a unique flow hole combination, the size, number and placement of the holes being determined in such a way that the water flow of the inlet channel can be conveyed as equally as possible to each UV reactor and that a uniform flow field is provided within the UV reactor. The flow hole combinations of the equalizing plate are also designed to have the flow resistance of the whole system as low as possible, i.e. to have the power requirement of the system for the volume of water treated as low as possible.

In one embodiment of the invention, regardless of the number of UV reactors, which may be connected in parallel for example in a number of 2-6, even more, the system preferably uses just one common mechanical filter in the inlet channel for removing larger organisms and solid material from water. Of course, it is possible that before each UV reactor there is a separate filter, but this solution is structurally and operationally more expensive.

The equalizing plate according to the invention is formed by a substantially uniformly thick plate covering the total flow cross section of water. The shape of the plate may vary according to the flow cross section of the flow channel, but normally round pipes are used, in which case also the equalizing plate is a round plate.

The exact placement of the equalizing plate may vary in different structures, but it is essential that it is suitably disposed before the treatment chamber of the UV reactor in such a way that the changes it makes on flow will be effective in the area of the treatment chamber. The equalizing plate may thus be disposed in the branch channel, at the junction of the branch channel and the UV reactor, or after the junction before the treatment chamber of the UV reactor.

Preferably, the equalizing plate comprises a large number of, for example 20-200, preferably 40-150, same-sized holes. The shape of the hole is most suitably a regular hexagon, whereby the holes can be as close as possible to each other in such a way that they are separated only by narrow equally wide strips. However, it is also possible in some embodiments to have other shapes of, for example round, holes.

In the case where the flow channel has smallest flows, i.e. the highest flow resistance, the equalizing plate should not limit the flows but only equalize the flow field within the UV reactor. In this case, the whole surface of the equalizing plate is preferably full of hexagonal holes in such a way that they are separated by narrow equally wide strips. The structure is simple, strong and effectively guides the flows without significantly increasing the flow resistance. In other words, in each case the equalizing plate before one of the UV reactors in parallel connection just equalizes the internal flows of the reactor without limiting the flow rates, and the other equalizing plates also limit the flows.

While in the above-mentioned flow channel the flows were not limited, in other channels the flows should be equalized, in which case the equalizing plates being used have a number of individual holes and/or holes formed as different-sized groups which together cover a part of the equalizing plate, for example plate-specifically 10-80% of its surface area.

The placement of the holes is determined computationally, experimentally or empirically, and they preferably are disposed asymmetrically relative to the center of the equalizing plate or relative to the diameter passing through the center of the equalizing plate.

The number of holes on different equalizing plates is chosen so that a substantially equal quantity of flow will pass through each UV reactor. The parallel-connected UV reactors, whether their number be two or more, always have different flow paths and flow resistances, whereby the equalizing plates of the parallel UV reactors are always different from each other. Thus, the number of holes and/or size of the holes on the plates varies from one equalizing plate to the other, so that the total flow resistances of the UV reactors will be of equal quantity. In other words, the water flows passing through them will be of equal quantity.

Also, the placement of the holes on the equalizing plate has an essential significance, as the placement of the holes on each equalizing plate is uniquely chosen so that a flow field that is as uniform as possible is formed within the UV reactor. Thus, by means of the size, placement and number of the holes uniquely on different equalizing plates, flows of equal quantity and equal uniformity are caused to flow through each UV reactor, so that the treatment of the flows in the UV chambers becomes uniform and the treated water evenly clean.

The water treatment method according to the invention is designed for improving the treatment efficiency in two or more parallel-connected UV reactors. According to the invention, in the water flow direction before each UV reactor there is provided a unique and UV-reactor-specific flow equalizing plate. With these perforated equalizing plates disposed transversely relative to the flow, the flow rates (kg/s) are equalized to be of substantially equal quantities through each UV reactor. Further according to the invention, by means of the equalizing plate the flows within each UV reactor are controlled to provide a uniform flow field within the UV reactor.

In the method according to the invention, the flow rates between different UV reactors are equalized by adjusting the number of flow openings of the equalizing plates and/or the size of their total flow cross section. Preferably, same-sized holes are used on all equalizing plates, so that by adjusting the number of holes, the different flows are equalized to be of equal quantity.

In the method according to the invention, the uniformity of the flow field within each of the UV reactors is adjusted by positioning and adjusting the placement of the equalizing plate's flow openings on the equalizing plate. Thus, the openings may be disposed symmetrically or asymmetrically on the plate, either individually or in suitable groups, but positioned in such a way that a uniform flow field prevails in the whole area of the chamber of the UV reactor.

## ADVANTAGES PROVIDED BY THE INVENTION

The system and the method according to the invention have considerable advantages over the prior art. The invention makes it possible to economically build water purification systems, as UV reactors do not have to be tailored and built separately for each place and size. Thanks to the invention, it suffices to have just a few standard UV reactor sizes which can be installed in parallel, in each case in a required number, to achieve a desired treatment capacity. With the invention, the parallel-connected UV reactors have in each case nearly identical conditions, i.e. flows of equal quantity and equally uniform flow fields within the reactors, due to the properly sized equalizing plates. Thus, each parallel reactor treats water that flows therethrough with the same efficiency.

Furthermore, in the system according to the invention it has been noted that, regardless of the use of equalizing plates and their flow-guiding properties, the pressure losses, i.e. flow resistances of the total parallel-connected system, do not increase but rather decrease in some embodiments when compared with an embodiment in which the equalizing plates are not used at all.

## BRIEF DESCRIPTION OF THE DRAWINGS

The invention will be described below in detail with reference to the accompanying drawings, in which

Fig. 1 is a diagrammatic illustration of parallel connection of two UV reactors according to the invention,
Fig. 2 is a diagrammatic illustration of parallel connection of three UV reactors according to the invention,
Fig. 3 is a diagrammatic illustration of parallel connection of four UV reactors according to the invention,
Fig. 4 shows the equalizing plates for use in the parallel connection of Fig. 1,
Fig. 5 shows the equalizing plates for use in the parallel connection of Fig. 2, and
Fig. 6 shows the equalizing plates for use in the parallel connection of Fig. 3.

## DETAILED DESCRIPTION OF THE INVENTION

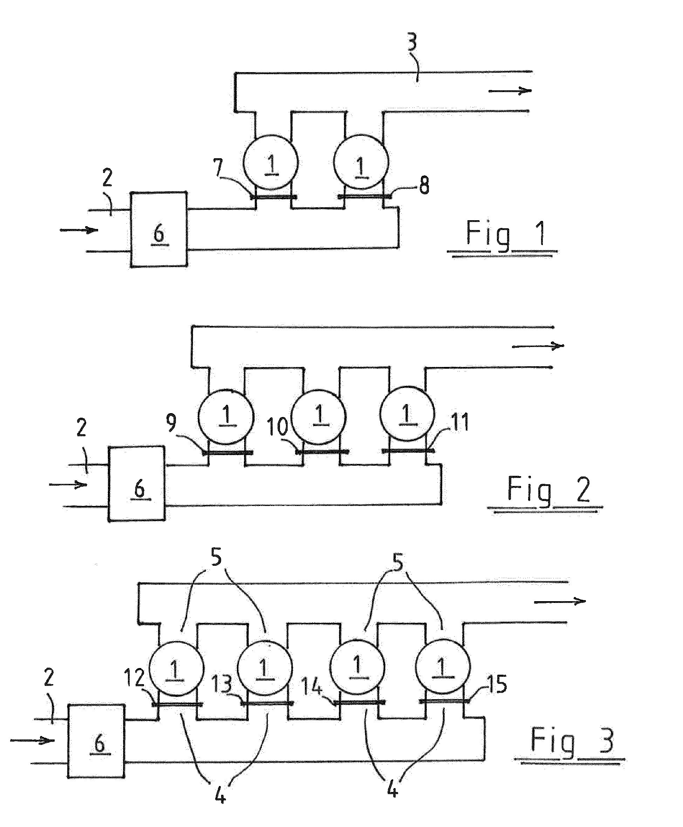

Fig. 1-3 illustrate a parallel connection of two, three and four similar UV reactors 1 under similar circumstances in which the UV reactors 1 are positioned transversely in parallel between an inlet channel 2 and an outlet channel 3 that are aligned. The inlet channel 2 first has a common filter 6 which is not, in terms of the inventive idea and operation, necessary but by means of which larger impurities, such as fishes, crustaceans, plankton and debris, are preferably filtered from flowing water. The inlet channel is then divided into as many branch channels 4 as there are UV reactors 1 connected. Before each UV reactor in the branch channel or between the branch channel and the UV reactor there is a unique equalizing plate 7-15 according to the invention. After the equalizing plate, the flow passes into the UV reactor, i.e. into its treatment chamber, from which the flow path leads via collector channels 5 to the common outlet channel 3.

In the cases according to Fig. 1-3, the water flows most easily straight along the inlet channel 2 as far as it can. Thus, without further guiding, the highest quantity of flow always occurs in the last UV reactor, i.e. on the right in the figures. Thus, in the direction of the flow, the first UV reactor always receives the lowest quantity of flow without any guiding. Therefore, the flow of the first reactor, i.e. the left-most reactor, need not be limited, i.e. choked; instead it suffices to equalize it by means of the equalizing plate 7,9,12 so as to form a uniform flow field in that particular UV reactor. Thus, the equalizing plate 7,9,12 of the UV reactor that has the lowest quantity of flow without any equalizing plates is perforated over its whole area, i.e. it is a regular and uniform honeycomb structure consisting of equally large holes shaped as regular hexagons.

The number of holes shaped as regular hexagons decreases in the equalizing plates 8,10,11,13,14,15 in proportion to the degree at which the flow would increase in the UV reactors 1 without equalization. Thus, the equalizing plate 8,11,15 of the last one among the parallel UV reactors has the smallest number of holes, i.e. it limits the flows to the greatest degree. This way, water flows of substantially equal quantitites will flow into the respective UV reactors through each parallel-connected equalizing plate.

Thus, by means of the number of holes of the equalizing plates, when all holes are equally large, or more specifically by means of the combined cross-sectional area of the holes being used on different equalizing plates, the flows are adjusted to be of substantially equal quantities in different UV reactors. By means of the placement of the holes on the equalizing plate, on the other hand, the flow is adjusted to be as uniform as possible in the treatment chamber of the UV reactor. The non-uniformity of the flow is due to the structures and shapes of the inlet channel 2 and branch channels 4, so the places and also numbers of the holes can in the best way be determined computationally or experimentally for each specific structural combination.

New equalizing plate calculations are not required for each new system according to the invention; instead, it is possible to define, for example for a specific UV reactor size with parallel connections of two, three, four and five reactors, separate equalizing plates for the connections shown in Fig. 1-3 and for connections in which the flow is reversed to its outlet direction. These can then be used in all similar connections to provide sufficient equalization for the flows.

The effect of the equalizing plate according to the invention is well illustrated by the percentages below which represent flow rates in the connections of Fig. 1-3 without and with equalizing plates.

In Fig. 1, the flows were divided as 63.9% and 36.1% without equalizing plates, and as 49.8% and 50.2% after installing them.

In Fig. 2, the flows were divided as 59.1%, 30.5% and 10.3% without equalizing plates, and as 33.7%, 33.2% and 33.1% after installing them.

In Fig. 3, the flows were divided as 57.5%, 29.4%, 9.2% and 3.9% without equalizing plates, and as 25.2%, 24.7%, 25.1% and 24.9% after installing them.

In addition, it is to be noted that in all three above-described cases the flow rates remained invariable with an accuracy of less than 1%. In other words, with the equalizing plates according to the invention the flow resistances of the total system do not increase.

Further, the advantages provided by the invention can be illustrated by examining uniformity of the flow at the same points of the systems of Fig. 1-3 without equalizing plates and with equalizing plates. The uniformity of the flow is represented by a uniformity index $\gamma$ that varies in the range from 0 to 1, where 1 corresponds to a completely uniform flow. $\gamma$ is calculated from the formula

$$\gamma \;=\; 1 \;-\; \frac{\sum\limits_{i} \left|v_i - \bar{v}\right| A_i}{2A\bar{v}}$$

in which

      $A_i$ = area of a surface element i
      $v_i$ = velocity at the surface element i
      $A$ = total surface area
      $\bar{v}$ = average velocity on the whole surface.

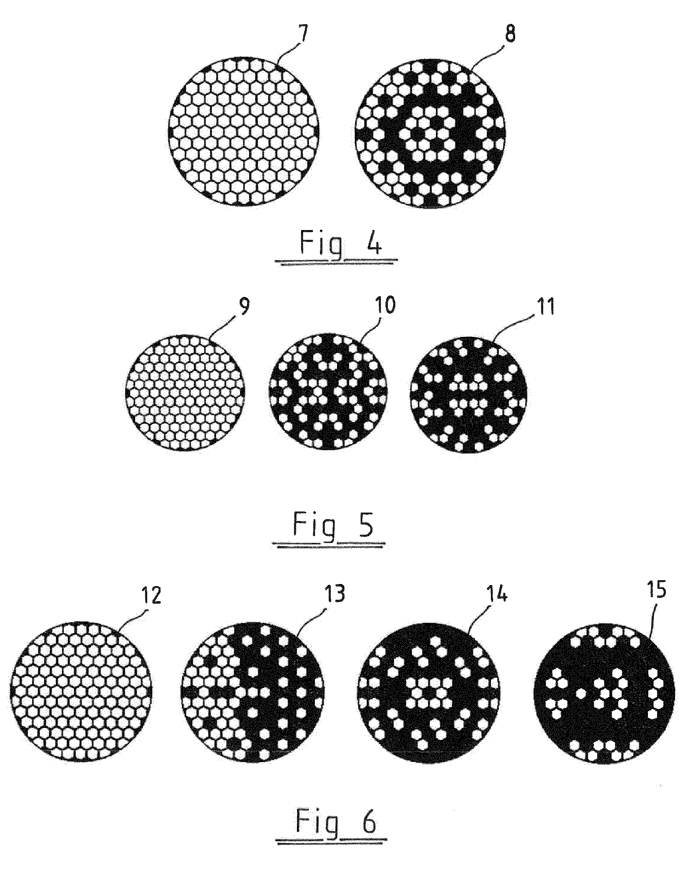

The following table presents uniformity indices of flows before the UV reactors of Fig. 1-3 without and with the equalizing plates of Fig. 4-6. The figures show that average uniformity of the flow is significantly increased, which in turn has a clear effect on

|  | Before | | | | After | | | | |
| --- | --- | --- | --- | --- | --- | --- | --- | --- | --- |
|  | R1 | R2 | R3 | R4 | R1 | R2 | R3 | R4 | Average change |
| CB500 | 0.68 | 0.72 | | | 0.7 | 0.74 | | | 0.02 |
| CB750 | 0.66 | 0.65 | 0.56 | | 0.63 | 0.7 | 0.64 | | 0.033333333 |
| CB1000 | 0.67 | 0.65 | 0.6 | 0.43 | 0.62 | 0.71 | 0.67 | 0.62 | 0.0675 |

the uniform operation of the UV reactors. The uniformity differences of parallel reactors are likewise reduced, whereby the reactors operate more accurately in the same way.

The most common case is that illustrated in Fig. 1-3 in which the flow of the inlet channel 2 is parallel to the flow of the outlet channel 3 on the other side of the UV reactors 1. It is also possible that the outlet channel 3 opens in the same direction from which the inlet channel 1 is laid or, depending on the available space in each case, the outlet channel may open in any direction. The structure according to the invention does in other words not limit the structures or shapes of the inlet channels and branch channels being used, but in very different channel systems the optimum result is reached by separately calculating the hole combinations for the equalizing plates.

The invention has been described above by way of example with reference to the accompanying drawings without in any way limiting the invention only to the structures described above. Different embodiments of the invention are possible within the scope defined by the claims.

**Claims**

1.   A water treatment system for removing impurities from water, the system comprising at least two parallel-connected UV reactors (1), an inlet channel (2) and an outlet channel (3) for conveying the water being treated into and out from the system, branch channels (4) for distributing and conveying the water of the inlet channel to the UV reactors, and collector channels (5) for conveying and combining the water from the UV reactors into the outlet channel, **characterized in that** in the water flow direction before each UV reactor (1) there is a UV-reactor-specific flow equalizing plate (7-15) which is provided with a unique flow hole combination for conveying the water flow of the inlet channel equally to each UV reactor and for providing a uniform flow field within the UV reactor.

2.   The water treatment system according to claim 1, **characterized in that** the system comprises 3 - 6 parallel-connected UV reactors (1).

3. The water treatment system according to claim 1 or 2, **characterized in that** the system comprises a filter (6) provided in the inlet channel (2) for removing larger impurities from water.

4. The water treatment system according to any one of claims 1-3, **characterized in that** the equalizing plate (7-15) is formed by a substantially uniformly thick plate covering the total flow cross section of water.

5. The water treatment system according to any one of claims 1-4, **characterized in that** the equalizing plate (7-15) is disposed in the branch channel, at the junction of the branch channel and the UV reactor or after the junction before the treatment chamber of the UV reactor.

6. The water treatment system according to any one of claims 1-5, **characterized in that** the equalizing plate (7-15) comprises a number of, for example 20-200, preferably 40-150, same-sized holes.

7. The water treatment system according to any one of claims 1-6, **characterized in that** the hole is shaped as a regular hexagon.

8. The water treatment system according to claim 7, **c h a r a c t e r i z e d in** that the whole surface of the equalizing plate (7-15) is full of hexagonal holes separated by narrow equally wide strips.

9. The water treatment system according to claim 6 or 7, **characterized in that** the equalizing plate (7-15) has a number of individual holes and/or holes formed as different-sized groups which together cover 10-80% of the surface area of the equalizing plate.

10. The water treatment system according to any one of claims 1-7 or 9, **characterized in that** the holes are disposed asymmetrically relative to the center of the equalizing plate or relative to the diameter passing through the center of the equalizing plate.

11. The water treatment system according to any one of claims 1-10, **characterized in that** the number of holes on different equalizing plates is chosen in such a way that flows of substantially equal quantities pass through each UV reactor.

12. The water treatment system according to any one of claims 1-11, **characterized in that** the placement of the holes on the equalizing plate in chosen in such a way that a flow field that is as uniform as possible is formed within the UV reactor.

13. A water treatment method for improving the treatment efficiency in two or more parallel-connected UV reactors (1), **characterized in that** in the water flow direction before each UV reactor (1) there is provided a unique and UV-reactor-specific flow equalizing plate (7-15) for equalizing the flow rates to be of substantially equal quantities through each UV reactor and for controlling the flows within each UV reactor to provide a uniform flow field within the UV reactor.

14. The water treatment method according to claim 13, **characterized in that** the flow rates are equalized by adjusting the number of flow openings of the equalizing plates and/or the extent of their total flow cross section.

15. The water treatment method according to claim 13 or 14, **characterized in that** the uniformity of the flow field is adjusted by adjusting the placement of the equalizing plate's flow openings on the equalizing plate.

Fig 1

Fig 2

Fig 3

Fig_4

Fig_5

Fig_6

Europäisches
Patentamt

European
Patent Office

Office européen
des brevets

# EUROPEAN SEARCH REPORT

Application Number

EP 15 19 0483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/321365 A1 (ERIKSSON EMIL [SE] ET AL) 31 December 2009 (2009-12-31) * paragraphs [0058], [0060], [0063], [0078], [0079]; claim 46 * * figures 1,2 * * abstract * | 1-15 | INV. C02F1/32 B01J19/12 ADD. C02F103/00 |
| Y | US 2011/014718 A1 (HAAS ALFRED [DE] ET AL) 20 January 2011 (2011-01-20) * paragraphs [0001], [0002], [0005], [0010] * * figure 1 * | 1-15 | |
| A | US 5 255 716 A (WILCOX PAUL L [NO]) 26 October 1993 (1993-10-26) * the whole document * | 1-15 | |
| A | US 2011/024365 A1 (YONG ZHEE MIN JIMMY [SG] ET AL) 3 February 2011 (2011-02-03) * the whole document * | 1-15 | |
| A | US 2002/117631 A1 (GADGIL ASHOK [US] ET AL) 29 August 2002 (2002-08-29) * the whole document * | 1-15 | TECHNICAL FIELDS SEARCHED (IPC) C02F F15D B01J |

The present search report has been drawn up for all claims

| Place of search | Date of completion of the search | Examiner |
|---|---|---|
| The Hague | 25 November 2015 | Fiocchi, Nicola |

## ANNEX TO THE EUROPEAN SEARCH REPORT
## ON EUROPEAN PATENT APPLICATION NO.

EP 15 19 0483

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2015

| Patent document cited in search report | | Publication date | Patent family member(s) | | Publication date |
|---|---|---|---|---|---|
| US 2009321365 | A1 | 31-12-2009 | EP | 2066589 A2 | 10-06-2009 |
| | | | JP | 2010504855 A | 18-02-2010 |
| | | | KR | 20090103993 A | 05-10-2009 |
| | | | US | 2009321365 A1 | 31-12-2009 |
| | | | WO | 2008039147 A2 | 03-04-2008 |
| US 2011014718 | A1 | 20-01-2011 | DE | 10361003 B3 | 28-07-2005 |
| | | | EP | 1706200 A2 | 04-10-2006 |
| | | | EP | 1839740 A2 | 03-10-2007 |
| | | | EP | 2272585 A1 | 12-01-2011 |
| | | | JP | 4688817 B2 | 25-05-2011 |
| | | | JP | 2007515646 A | 14-06-2007 |
| | | | US | 2007148062 A1 | 28-06-2007 |
| | | | US | 2009258431 A1 | 15-10-2009 |
| | | | US | 2011014718 A1 | 20-01-2011 |
| | | | WO | 2005063372 A2 | 14-07-2005 |
| US 5255716 | A | 26-10-1993 | NONE | | |
| US 2011024365 | A1 | 03-02-2011 | CN | 102482121 A | 30-05-2012 |
| | | | EP | 2459489 A2 | 06-06-2012 |
| | | | JP | 2013500854 A | 10-01-2013 |
| | | | KR | 20120053025 A | 24-05-2012 |
| | | | SG | 178138 A1 | 29-03-2012 |
| | | | US | 2011024365 A1 | 03-02-2011 |
| | | | WO | 2011014717 A2 | 03-02-2011 |
| US 2002117631 | A1 | 29-08-2002 | US | 2002117631 A1 | 29-08-2002 |
| | | | US | 2005092931 A1 | 05-05-2005 |
| | | | US | 2006192136 A1 | 31-08-2006 |

EPO FORM P0459

For more details about this annex : see Official Journal of the European Patent Office, No. 12/82